# EUROPEAN PATENT APPLICATION

(11) **EP 1 775 941 A2**
(43) Date of publication of application: **18.04.2007**
(21) Application number: 06021080.4
(22) Date of filing: 06.10.2006
(51) Int. Cl.: H04N 5/445

(54) **Setting information writing apparatus and tuner-incorporated electronic apparatus**

(30) Priority: 14.10.2005 JP 2005300930
(71) Applicant: Funai Electric Co., Ltd., Daito-shi, Osaka 574-0031 (JP)
(72) Inventor: Sakasegawa, Yosuke c/oFunai Electric Co., Ltd., Daito Osaka (JP)
(74) Representative: Grünecker, Kinkeldey, Stockmair & Schwanhäusser Anwaltssozietät

(57) **Abstract**

There is provided a setting information writing apparatus capable of saving the effort of channel setting for a tuner-incorporated electronic apparatus in which setting information written in an external recording medium is taken and used therein. In an arrangement of writing setting information into an external recording medium to be used in a tuner-incorporated electronic apparatus in which the setting information written in the external recording medium, which is attachable/detachable to/from the apparatus main body, is read into a setting information storage means, and when an input number is input, the channel corresponding to the input number is set by referring to the setting information stored in the setting information storage means, there is provided input means 5 for inputting area information indicating an area, wherein the setting information corresponding to the input area information is written into the external recording medium 61 or 62 by referring to a database 18 with setting information corresponding to respective areas recorded therein.

## Description

### BACKGROUND OF THE INVENTION

### 1. Field of the Invention

The present invention relates to a setting information writing apparatus and a tuner-incorporated electronic apparatus for writing setting information indicating the relationship between an input number to be input to input means and a TV broadcast channel number to be received by a tuner section into an external recording medium attachable/detachable to/from the apparatus main body.

### 2. Description of the Prior Art

Channel setting is one of setting items in TV receivers, DVD recorders, etc., that is, to set the relationship between a number indicated by, for example, a numeric key on a remote controller and an actually received channel number in commercial broadcasting. Meanwhile, even if such setting may be performed, when a new TV receiver is purchased, it is necessary to perform further channel setting, resulting in taking extra effort to cause a hassle. Therefore, the following technique has been proposed (hereinafter referred to as first related art).

That is, in this technique, setting information in a TV receiver that is available to a user is transmitted to a plant through a communication line such as the Internet. Then, on the plant side, the transmitted setting information is stored in a TV receiver that the user will purchase, and then the TV receiver is delivered to the user. Therefore, in the case of purchasing a new TV receiver, since the TV receiver is delivered with the same settings as set in a previously used TV receiver, the burden of performing further setting can be removed (refer to Japanese Patent Laid-Open Publication No. 2002-49793 for example).

The following technique has also been proposed (hereinafter referred to as second related art). That is, in this technique, setting information including channel setting is stored in an external storage medium attachable/detachable to/from a TV receiver or a writable nonvolatile memory such as an EEPROM. Then, the setting of channel to be received actually is thereafter performed by referring to the setting information stored in the external storage medium or EEPROM. Also, it is additionally disclosed that it is possible to employ an arrangement in which after writing the setting information stored in the external storage medium or EEPROM into a RAM connected to a control microcomputer, the setting information written in the RAM is referred to.

It is also disclosed that after setting information is prepared in a TV receiver that has already been available and stored in an external storage medium, the external storage medium is detached from the TV receiver and the detached external storage medium is attached to another TV receiver. This causes the setting of the latter TV receiver to be the same as that prepared in the existing TV receiver. Therefore, the setting of a TV receiver at an outside location and/or a newly purchased TV receiver can be the same as that of the TV receiver that has already been available (refer to Japanese Patent Laid-Open Publication No. 2003-23576 for example).

However, employing the first related art suffers from the following problems. That is, an apparatus for transmitting the setting information from the user side to the plant side is required. On the plant side, an apparatus for storing the received setting information into the TV receiver is also required. That is, the related art, which requires a system for transmitting the setting information in the TV receiver that is available to the user to the plant side and thereafter for storing the information into the TV receiver to be shipped, has difficulty in being practical because the system becomes too large.

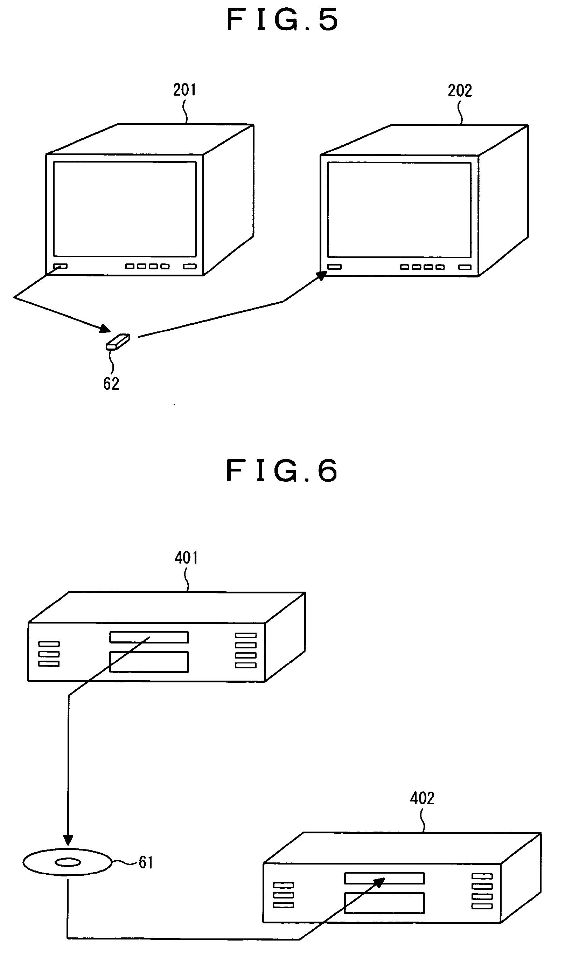

In the second related art, the setting information prepared in the TV receiver is merely "stored in a storage medium attachable/detachable to/from the TV receiver such as an external storage medium or stored in a writable nonvolatile memory incorporated in the TV receiver and connected to a microcomputer such as an EEPROM". That is, the setting information stored in the external storage medium cannot be read into the EEPROM. Therefore, in order to cause the setting of the TV receiver 202 to be the same as that of the TV receiver 201 in Fig.5 for example, the external storage medium (external recording medium) 62 with setting information stored therein by being attached to the TV receiver 201 is required to remain attached to the TV receiver 202 (Although there is disclosed an arrangement in which after the contents stored in the external storage medium are written into the RAM, the setting information written in the RAM is referred to, the setting information written in the RAM is to be lost if the power is turned off. Therefore, when the power is next turned on, it is necessary to transfer the setting information stored in the external storage medium again to the RAM. This requires the external storage medium to remain attached even in the case of such an arrangement in which the information written in the RAM is referred to).

Therefore, if it is intended to operate both the TV receivers 201 and 202 with the same settings, it is necessary to keep a state where the external storage medium 62 is attached to the TV receiver 202. That is, if the external storage medium 62 is detached from the TV receiver 202, the TV receiver 202 has no intended setting. Therefore, in the case of using three TV receivers, if the external storage medium 62 that has been connected to the TV receiver 202 is attached to the third TV receiver, someone must perform setting for the TV receiver 202, resulting in a problem of wasting his or her time.

Also, even in the case of employing either the above-described first or second related art, it is necessary to perform channel setting, resulting in a problem of taking extra effort for the setting.

### SUMMARY OF THE INVENTION

The present invention has been made to solve the above-described problems, and an object thereof is to provide a setting information writing apparatus capable of saving the effort of channel setting for a tuner-incorporated electronic apparatus, of confirming the channel setting easily, and of making the channel setting closer to the preferences of users.

It is another object of the present invention to provide a setting information writing apparatus capable of saving the effort of channel setting for a tuner-incorporated electronic apparatus in which setting information corresponding to an input area is written into an external recording medium by referring to a database with setting information corresponding to respective areas recorded therein, and then the setting information written in the external recording medium is taken and used therein.

In addition to the foregoing object, it is still another object of the present invention to provide a setting information writing apparatus capable of confirming channel setting easily by displaying setting information corresponding to an input area.

It is a further object of the present invention to provide a tuner-incorporated electronic apparatus in which a nonvolatile memory is used to read and store setting information recorded on an external recording medium, whereby after the external recording medium is connected and the setting information is read out, the channel setting according to the setting information recorded on the external recording medium can be achieved even if the external recording medium may be detached, so that the channel setting of the apparatus after the external recording medium is detached can be kept the same as that stored in the external recording medium.

In addition to the foregoing object, it is a still further object of the present invention to provide a tuner-incorporated electronic apparatus having functions of both recording and reproducing data onto/from an optical disk, in which no additional hardware can be required by writing setting information into the optical disk to allow the setting information to be copied to another apparatus.

In order to solve the above-described problems, the present invention is directed to a setting information writing apparatus for writing setting information into an external recording medium to be used in a tuner-incorporated electronic apparatus including: a tuner section for receiving TV broadcasts; setting information storage means for storing setting information indicating the relationship between an input number to be input to input means and a TV broadcast channel number to be received by the tuner section; information reading means for reading setting information written in an external recording medium attachable/detachable to/from the apparatus main body into the setting information storage means when instructed to read the setting information; and channel control means for setting the channel corresponding to the input number by referring to the setting information stored in the setting information storage means when the input number is input. Then, the setting information writing apparatus includes the input means for inputting area information indicating an area, wherein the setting information corresponding to the area information input to the input means is displayed on a display device by referring to a database with setting information corresponding to respective areas recorded therein and the setting information displayed on the display device can be changed, and further the setting information displayed on the display device is written into the external recording medium when instructed to write therein.

That is, when area information indicating an area is input to the input means, the setting information corresponding to the input area information (i.e. setting information corresponding to the area where a tuner-incorporated electronic apparatus such as a TV receiver is installed) is written into the external recording medium. Therefore, the tuner-incorporated electronic apparatus is set to be capable of receiving TV broadcasts on channels corresponding to the area only by reading the setting information written in the external recording medium into the setting information storage means in the tuner-incorporated electronic apparatus. Also, when the area information is input, a list of input numbers to be input using a remote controller, etc. and received channel numbers corresponding to the respective input numbers is displayed. Further, the received channel numbers corresponding to the respective input numbers can be changed.

The present invention is also directed to a setting information writing apparatus for writing setting information into an external recording medium to be used in a tuner-incorporated electronic apparatus including: a tuner section for receiving TV broadcasts; setting information storage means for storing setting information indicating the relationship between an input number to be input to input means and a TV broadcast channel number to be received by the tuner section; information reading means for reading setting information written in an external recording medium attachable/detachable to/from the apparatus main body into the setting information storage means when instructed to read the setting information; and channel control means for setting the channel corresponding to the input number by referring to the setting information stored in the setting information storage means when the input number is input. Then, the setting information writing apparatus includes the input means for inputting area information indicating an area, wherein the setting information corresponding to the area information input to the input means is written into the external recording medium by referring to a database with setting information corresponding to respective areas recorded therein.

That is, when area information indicating an area is input to the input means, the setting information corresponding to the input area information (i.e. setting information corresponding to the area where a tuner-incorporated electronic apparatus such as a TV receiver is installed) is written into the external recording medium. Therefore, the tuner-incorporated electronic apparatus is set to be capable of receiving TV broadcasts on channels corresponding to the area only by reading the setting information written in the external recording medium into the setting information storage means in the tuner-incorporated electronic apparatus.

In addition to the arrangement above, the setting information corresponding to the area information input to the input means is displayed on a display device. That is, when the area information is input, a list of input numbers to be input using a remote controller, etc. and received channel numbers corresponding to the respective input numbers is displayed.

The present invention is also directed to a tuner-incorporated electronic apparatus including: a tuner section for receiving TV broadcasts; setting information storage means for storing setting information indicating the relationship between an input number to be input to input means and a TV broadcast channel number to be received by the tuner section; information writing means for writing setting information stored in the setting information storage means into an external recording medium attachable/detachable to/from the apparatus main body when instructed to write the setting information; information reading means for reading setting information written in the external recording medium into the setting information storage means when instructed to read the setting information; and channel control means for setting the channel corresponding to the input number by referring to the setting information stored in the setting information storage means when the input number is input, wherein the setting information storage means is a nonvolatile memory.

That is, even if the external recording medium may be detached after the setting information is written into the external recording medium, the setting information stored in the setting information storage means can be kept the same as before the setting information is written into the external recording medium. The setting information stored in the setting information storage means can also be kept the same even if the power may be turned off.

In addition to the arrangement above, the tuner-incorporated electronic apparatus further includes a disk driving section for writing data into an optical disk and for reproducing data written in an optical disk, wherein the external recording medium is an optical disk. That is, the setting information can be copied to another apparatus by writing the setting information into the optical disk.

In accordance with the present invention, when area information indicating an area is input to the input means, the setting information corresponding to the input area information is written into the external recording medium. Therefore, the tuner-incorporated electronic apparatus is set to be capable of receiving TV broadcasts on channels corresponding to the area only by reading the setting information written in the external recording medium into the setting information storage means in the tuner-incorporated electronic apparatus. Also, when the area information is input, a list of input numbers to be input using a remote controller, etc. and received channel numbers corresponding to the respective input numbers is displayed. Further, the received channel numbers corresponding to the respective input numbers can be changed. It is therefore possible to save the effort of channel setting for the tuner-incorporated electronic apparatus, to confirm the channel setting easily, and to make the channel setting closer to the preferences of users.

Also, in accordance with the present invention, when area information indicating an area is input to the input means, the setting information corresponding to the input area information is written into the external recording medium. Therefore, the tuner-incorporated electronic apparatus is set to be capable of receiving TV broadcasts on channels corresponding to the area only by reading the setting information written in the external recording medium into the setting information storage means in the tuner-incorporated electronic apparatus. This allows the effort of channel setting for the tuner-incorporated electronic apparatus in which the setting information written in the external recording medium is taken and used therein to be saved.

Further, when the area information is input, a list of input numbers to be input using a remote controller, etc. and received channel numbers corresponding to the respective input numbers is displayed, whereby it is possible to confirm the channel setting easily.

Also, in accordance with the present invention, even if the external recording medium may be detached after the setting information is written into the external recording medium, the setting information stored in the setting information storage means can be kept the same as before the setting information is written into the external recording medium. The setting information stored in the setting information storage means can also be kept the same even if the power may be turned off. Thus, the channel setting of the apparatus after the external recording medium is detached can be kept the same as that stored in the external recording medium.

Furthermore, the setting information can be copied to another apparatus by writing the setting information into an optical disk, whereby no additional hardware can be required to allow the setting information to be copied to another apparatus.

### BRIEF DESCRIPTION OF THE DRAWINGS

Fig.1 is a block diagram showing the electrical configuration of a computer that constitutes an embodiment of a setting information writing apparatus according to the present invention;
Fig.2 is a block diagram showing the electrical configuration of a TV receiver as an embodiment of a tuner-incorporated electronic apparatus according to the present invention;
Fig.3 is a block diagram showing the electrical configuration of a DVD recorder as another embodiment of the tuner-incorporated electronic apparatus according to the present invention;
Fig.4 is an illustrative view showing setting information and area information;
Fig.5 is an illustrative view showing the connective relationship between an external recording medium and TV receivers;
Fig.6 is an illustrative view showing the relationship between an external recording medium (optical disk) and DVD recorders;
Fig.7 is a flow chart showing the main operation of the TV receiver;
Fig.8 is a flow chart showing the main operation of the setting information writing apparatus; and
Fig.9 is a flow chart showing the main operation of the DVD recorder.

### DESCRIPTION OF THE PREFERRED EMBODIMENTS

Embodiments of the present invention will hereinafter be described with reference to the accompanying drawings.

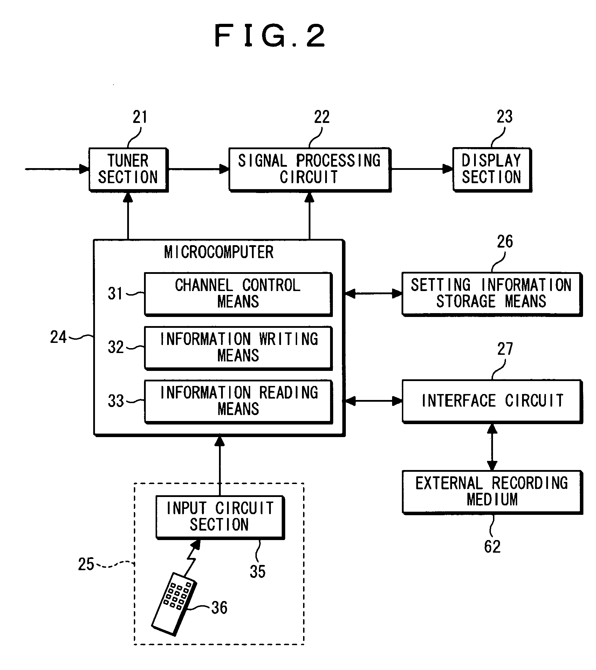

Fig.2 is a block diagram showing the electrical configuration of a TV receiver as an embodiment of a tuner-incorporated electronic apparatus according to the present invention.

In the figure, the tuner section 21 is adapted to receive TV broadcasts on a channel directed by a microcomputer 24, and then to output received video and audio signals to a signal processing circuit 22. The signal processing circuit 22 is adapted to send a display signal that is obtained by performing predetermined processing on the video signal output from the tuner section 21 to a display section 23 composed of a liquid crystal display or a CRT, etc. The display section 23 is adapted to display the display signal output from the signal processing circuit 22 as an image (audio signal path is omitted in the figure).

The input circuit section 35, which is composed of key switches such as power key provided on the front panel of the apparatus main bodies (TV receivers) 201 and 202 shown in Fig.5 and a light receiving unit (omitted in the figure) for receiving an infrared signal from a remote controller (hereinafter referred to as RC) 36, is adapted to receive instructions from users, and further to output the received instructions to the microcomputer 24 (the input circuit section 35 and RC 36 constitute input means 25).

The setting information storage means 26, which is composed of an EEPROM as a nonvolatile memory, is adapted to store setting information (hereinafter described in detail) indicating the relationship between input numbers to be input to the input means 25 and TV broadcast channel numbers to be received by the tuner section 21.

The interface circuit 27 is adapted to send data output from the microcomputer 24 to an external recording medium 62, and also to send data output from the external recording medium 62 to the microcomputer 24. The external recording medium 62, which is composed of, for example, a USB memory, is adapted to record data output from the interface circuit 27, and also to output recorded data to the interface circuit 27.

The microcomputer 24, which includes channel control means 31, information writing means 32, and information reading means 33, is adapted to control the main operation as a TV receiver, that is, to control channels received by the tuner section 21 in accordance with instructions input to the RC 36, etc. The microcomputer 24 is also adapted to control the volume output from a speaker not shown in the figure in accordance with instructions input to the RC 36, etc., and further to control power on and off and so on.

In detail, when an input number is input to the input means 25, the channel control means 31 is adapted to set the channel received by the tuner section 21 by referring to setting information stored in the setting information storage means 26. The information writing means 32 is adapted to write setting information stored in the setting information storage means 26 into the external recording medium 62 through the interface circuit 27 when instructed to write the setting information through the RC 36. The information reading means 33 is adapted to read setting information recorded on the external recording medium 62 therein through the interface circuit 27 as well as to store the read setting information into the setting information storage means 26 when instructed to read the setting information through the RC 36.

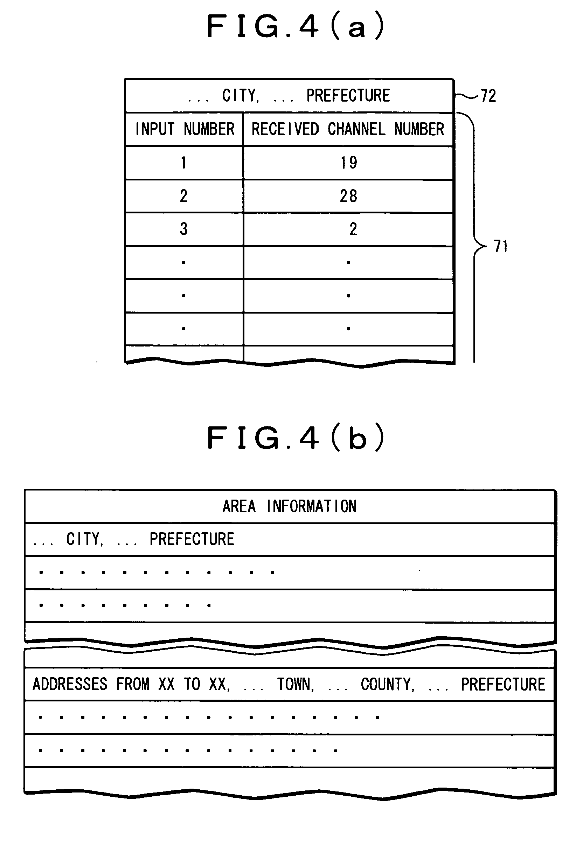

Here will be described setting information. As shown in Fig.4 (A), setting information indicates the relationship (indicated by the numeral 71) between a value (input number) to be indicated by a numeric key provided on the RC 36 and a TV broadcast channel number (received channel number) to be received by the tuner section 21 when the input number is input using the RC 36. Fig.4 (A) shows the case where if the numeric key "1" is pressed, TV broadcasts on channel 19 are received; if the key "2" is pressed, TV broadcasts on channel 28 are received; and if the key "3" is pressed, TV broadcasts on channel 2 are received.

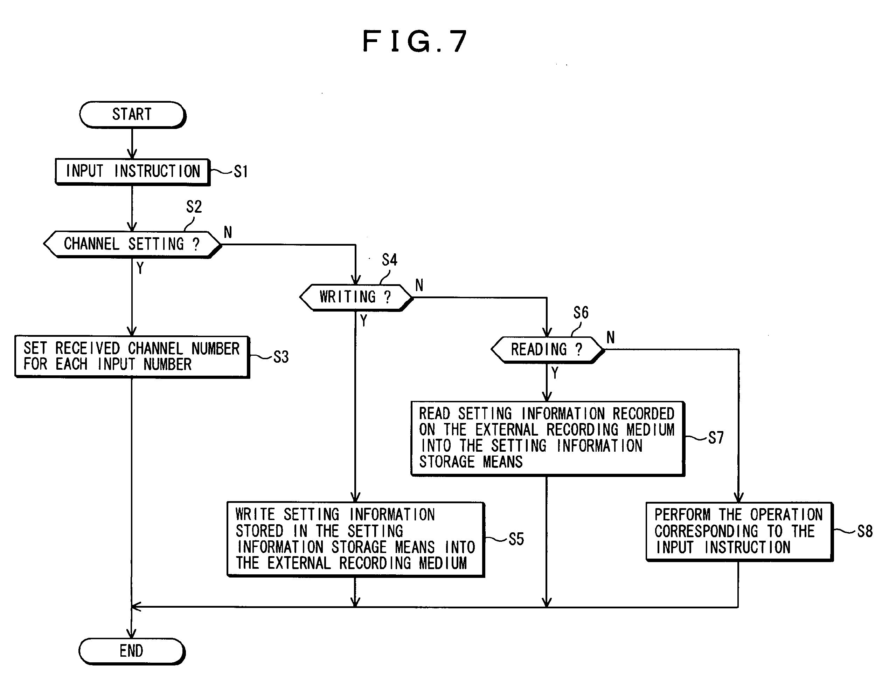

Fig.7 is a flow chart showing the operation related to the setting information in the above-described embodiment. The operation according to the embodiment will be described with appropriate reference to the figure.

When an instruction is input by a method of, for example, using an icon in a menu screen (omitted in the figures) that is displayed on the display section 23 (step S1), if the input instruction is channel setting, an input number is input to the RC 36 to direct a received channel number. That is, if 1 to 12 can be assigned as input numbers for example, a received channel number is set for each of the input numbers "1" to "12". It is noted that this operations is the same as in the related art, and that setting information generated through the operation is stored into the setting information storage means 26 (steps S2 and S3).

If the input instruction is "writing", the information writing means 32 reads out setting information stored in the setting information storage means 26 and then outputs the information to the external recording medium 62 through the interface circuit 27. The external recording medium 62 records the setting information output from the interface circuit 27 therein. It is noted that this operation can be performed at any timing as long as setting information is stored in the setting information storage means 26 and the external recording medium 62 is connected to the interface circuit 27. Also, the setting information stored in the setting information storage means 26 remains stored as it is even after written into the external recording medium 62 (steps S2, S4, and S5).

If the input instruction is "reading", the information reading means 33 reads setting information recorded on the external recording medium 62 through the interface circuit 27. Then, the read setting information is stored into the setting information storage means 26 (in this case, the setting information that has already been stored in the setting information storage means 26 is replaced with the new setting information). It is noted that this operation can be performed regardless of whether or not setting information is stored in the setting information storage means 26 as long as the external recording medium 62 is connected to the interface circuit 27 (steps S2, S4, S6, and S7).

It is noted that if the input instruction is different from the foregoing instructions, the operation corresponding to the input instruction is performed (steps S2, S4, S6, and S8).

A case where a new TV receiver is purchased will hereinafter be described with reference to Fig.5. The TV receiver 201 in Fig.5 represents a TV receiver that has already been available and in the setting information storage means 26 is stored setting information that has always been used. In this state, an external recording medium 62 is connected to the TV receiver 201 and a "writing" instruction is input to the TV receiver 201 to write the setting information in the TV receiver 201 into the external recording medium 62.

Next, the external recording medium 62 is detached from the TV receiver 201 and connected to the TV receiver 202. Then, the setting information recorded on the external recording medium 62 is stored into the setting information storage means 26 in the TV receiver 202 by inputting a "reading" instruction to the TV receiver 202. After this operation, the relationship between input numbers and received channel numbers in the TV receiver 202 is the same as that in the TV receiver 201 regardless of whether or not the external recording medium 62 is connected to the TV receiver 202.

That is, the relationship between input numbers and received channel numbers in the two TV receivers 201 and 202 can be the same. Therefore, even if a further new TV receiver may be purchased, the relationship between input numbers and received channel numbers in the newly purchased third TV receiver can be the same as that in the TV receiver 201 that has already been available through the same operation.

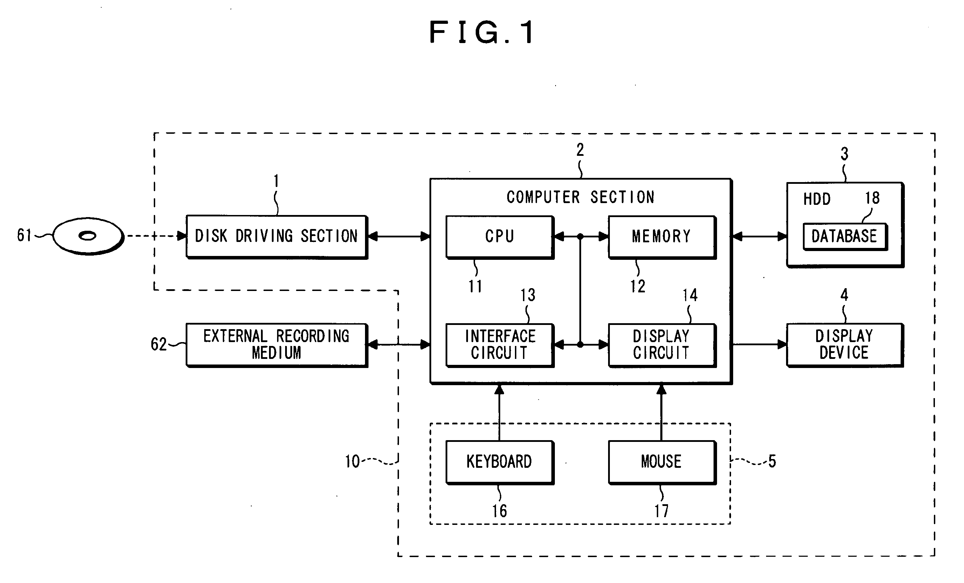

Fig.1 is a block diagram showing the electrical configuration of a setting information writing apparatus according to an embodiment of the present invention.

In the figure, the disk driving section 1 is adapted to reproduce data recorded on an optical disk 61 and to output the data to a computer section 2. The disk driving section 1 is also adapted to write data output from the computer section 2 into a writable or rewritable optical disk (external recording medium according to the present invention) 61. The display device 4, which is composed of, for example, a liquid crystal display or a CRT display, is adapted to display an image signal output from the computer section 2.

The hard disk drive (hereinafter referred to as HDD) 3, which is an external storage device when viewed from the computer section 2, is adapted to store programs for achieving the present embodiment and other programs, and also to store a database 18 indicating setting information corresponding to respective areas.

As has already been described, the external recording medium 62, which is an external recording medium (e.g. USB memory) to be connected to the TV receiver 201 or 202 and is attachable/detachable to/from the computer section 2, is adapted to record setting information. The keyboard 16 and mouse 17, which constitute input means 5 according to the present invention, are for inputting various instructions and data (e.g. area information indicating an area).

The computer section 2 is connected to the disk driving section 1, HDD 3, etc. to constitute the principal part of the personal computer hardware, and therefore includes a CPU 11, a memory 12, an interface circuit 13, and a display circuit 14 (although other circuits are provided as appropriate, these are omitted in the figure). The CPU 11 is adapted to read out programs stored in the HDD 3 through the interface circuit 13 and to transfer the programs to the memory 12. Then, the programs transferred to the memory 12 are executed to achieve the apparatus according to the present embodiment.

The CPU 11 is also adapted to exchange data with the disk driving section 1 and/or HDD 3 through the interface circuit 13, and further to receive data input to the keyboard 16 and/or instructions by the mouse 17 through the interface circuit 13.

That is, when area information indicating an area (hereinafter described in detail) is input to the input means 5, the setting information writing apparatus 10, which is composed of the disk driving section 1, computer section 2, HDD 3, display device 4, and input means 5, is adapted to write the setting information corresponding to the area information input to the input means 5 into an external recording medium (external recording medium 62 or writable or rewritable optical disk 61) by referring to the database 18 with setting information corresponding to respective area information recorded therein.

It is noted that the setting information corresponding to the input area information is displayed on the display device 4 before written into the external recording medium. Then, the relationship between input numbers and received channel numbers in the displayed setting information can be changed as appropriate.

The database 18 stored in the HDD 3 will hereinafter be described. The database 18 is provided with being stored in the optical disk (e.g. CD-ROM) 61 together with programs required to achieve the present embodiment. Therefore, when the programs are transferred to the HDD 3, the database 18 is also transferred and stored into the HDD 3.

As shown in Fig.4 (A), the database 18 stored in the HDD 3 includes setting information 71 indicating the relationship between input numbers and received channel numbers and additionally area information 72 indicating an area. Also, as shown in Fig.4 (B), the area information 72 is classified not by postcode but by address. This is for the reason that in mountain areas, even if the areas may have the same postcode, areas separated by only one mountain can have their respective different received channel numbers that can be received, whereby the content of setting information can be different even if the areas may have the same postcode.

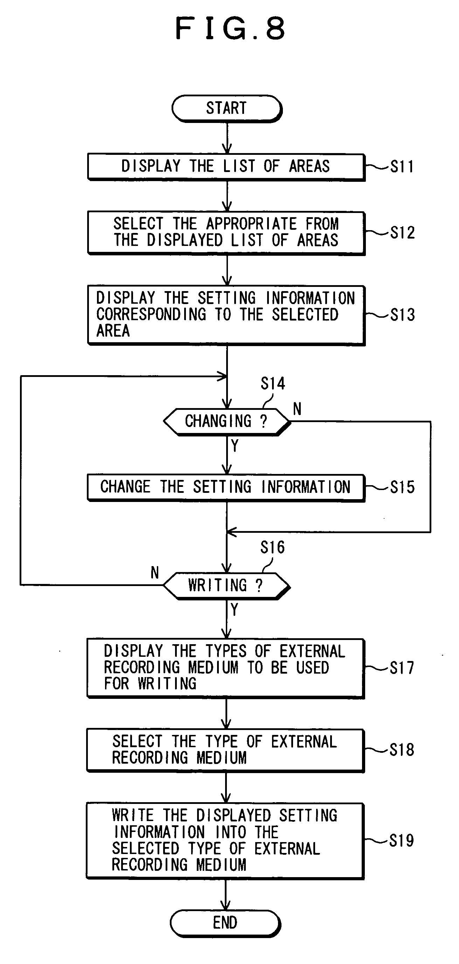

Fig.8 is a flow chart showing the main operation of the above-described embodiment. The operation according to the embodiment will be described with appropriate reference to the figure.

The setting information writing apparatus 10 displays a list of areas on the display device 4, when brought into an operating state, based on the area information stored in the database 18 (step S11). When the appropriate area is selected (area information is input) among the displayed list of areas (step S12), the setting information corresponding to the selected area is read out from the database 18 and displayed on the display device 4 (step S13).

When changing the relationship between input numbers and received channel numbers in the displayed setting information, the cursor is moved to a received channel number that is intended to be changed and the keyboard 16 is used to input a received channel number that is intended to be received (steps S14 and S15). Then, a writing instruction is input. Also, if there is no need for changing, a writing instruction is input with no change. When the writing instruction is input, the option (omitted in the figure) of using an external recording medium 62 (USB memory) or an optical disk 61 to write the setting information is displayed (steps S16 and S17). Subsequently, when a target medium is selected, the setting information is written into the selected target medium (steps S18 and S19).

Assuming now that the setting information is written into the external recording medium 62, the TV receivers 201 and 202 can receive programs on channels best suited for the area where the TV receivers are installed only by connecting the external recording medium 62 to the TV receiver 201 or 202 and by giving a reading instruction.

Meanwhile, in step S18, if the optical disk 61 is selected, the setting information is to be written into the optical disk 61. An apparatus in which the channel of TV broadcasts to be received is set using the setting information written in the optical disk 61 will hereinafter be described.

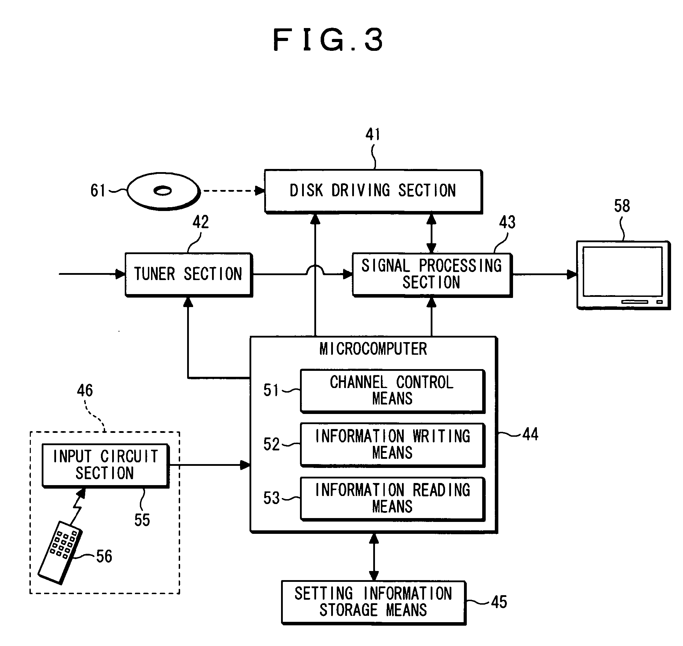

The apparatus is another embodiment of the tuner-incorporated electronic apparatus and is specifically a DVD recorder. Fig.3 is a block diagram showing the electrical configuration of the DVD recorder.

The tuner section 42 is adapted to receive TV broadcasts on a channel directed by a microcomputer 44, and then to output received video and audio signals to a signal processing section 43. The disk driving section 41 is adapted to reproduce data recorded on an optical disk 61 and to output the data to the signal processing section 43. The disk driving section 41 is also adapted to write data output from the signal processing section 43 into a writable or rewritable optical disk (external recording medium according to the present invention) 61.

The signal processing section 43 is adapted to A/D convert the video and audio signals output from the tuner section 42, and then to output compressed signals obtained by performing compression processing and streaming processing to the disk driving section 41. The signal processing section 43 is also adapted to separate the compressed signals output from the disk driving section 41 into video, audio, and subpicture signals and to expand the signals, and further to D/A convert the expanded signals and then to output the signals to a TV receiver 58 that is provided outside.

The input circuit section 55, which is composed of key switches such as power key provided on the front panel of the apparatus main bodies (DVD recorders) 401 and 402 shown in Fig.6 and a light receiving unit (omitted in the figure) for receiving an infrared signal from a remote controller (hereinafter referred to as RC) 56, is adapted to receive instructions from users, and further to output the received instructions to the microcomputer 44 (the input circuit section 55 and RC 56 constitute input means 46).

The setting information storage means 45, which is composed of an EEPROM as a nonvolatile memory, is adapted to store setting information indicating the relationship between input numbers to be input to the input means 46 and TV broadcast channel numbers to be received by the tuner section 42.

The microcomputer 44, which includes channel control means 51, information writing means 52, and information reading means 53, is adapted to control the main operation as a DVD recorder, that is, to control channels received by the tuner section 42 in accordance with instructions input to the RC 56, etc. The microcomputer 24 is also adapted to reproduce video and audio signals recorded on the optical disk (e.g. DVD) 61 in accordance with instructions input to the RC 56, etc. and display the signals on the TV receiver 58, and further to record programs received by the tuner section 42 onto the optical disk 61.

In detail, when an input number is input to the input means 46, the channel control means 51 is adapted to set the channel received by the tuner section 42 by referring to setting information stored in the setting information storage means 45. The information writing means 52 is adapted to write setting information stored in the setting information storage means 45 into the optical disk 61, an external recording medium, through the disk driving section 41 when instructed to write the setting information through the RC 56. The information reading means 53 is adapted to read setting information recorded on the optical disk 61, an external recording medium, through the disk driving section 41 as well as to store the read setting information into the setting information storage means 45 when instructed to read the setting information through the RC 56.

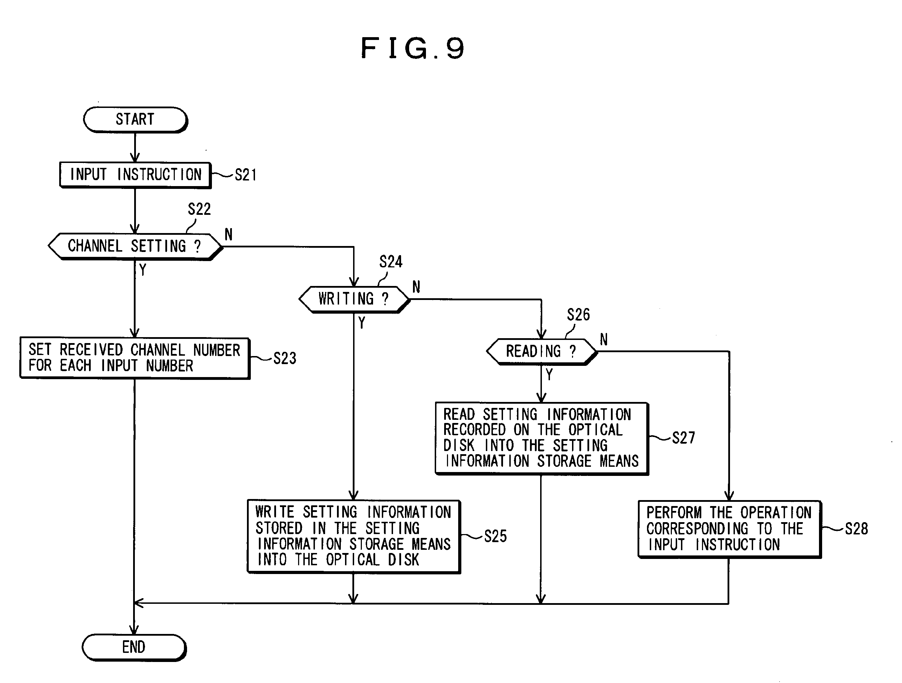

Fig.9 is a flow chart showing the operation related to the setting information in the above-described embodiment. The operation according to the embodiment will be described with appropriate reference to the figure.

When an instruction is input by a method of, for example, using an icon in a menu screen (omitted in the figures) that is displayed on the TV receiver 58 (step S21), if the input instruction is channel setting, an input number is input to the RC 56 to direct a received channel number. That is, if 1 to 12 can be assigned as input numbers for example, a received channel number is set for each of the input numbers "1" to "12". It is noted that this operations is the same as in the related art, and that setting information generated through the operation is stored into the setting information storage means 45 (steps S22 and S23).

If the input instruction is "writing", the information writing means 52 reads out setting information stored in the setting information storage means 45 and writes the readout setting information into the optical disk 61, an external recording medium, through the disk driving section 41. It is noted that this operation can be performed at any timing as long as setting information is stored in the setting information storage means 45 and the writable optical disk 61 is mounted on the disk driving section 41. Also, the setting information stored in the setting information storage means 45 remains stored as it is even after written into the optical disk 61 (steps S22, S24, and S25).

If the input instruction is "reading", the information reading means 53 reads setting information recorded on the optical disk 61, an external recording medium, through the disk driving section 41. Then, the read setting information is stored into the setting information storage means 45 (in this case, the setting information that has already been stored in the setting information storage means 45 is replaced with the new setting information). It is noted that this operation can be performed regardless of whether or not setting information is stored in the setting information storage means 45 as long as the optical disk 61 is mounted on the disk driving section 41 (steps S22, S24, S26, and S27).

It is noted that if the input instruction is different from the foregoing instructions, the operation corresponding to the input instruction is performed (steps S22, S24, S26, and S28).

A case where a new DVD recorder is purchased will hereinafter be described with reference to Fig.6. The DVD recorder 401 in Fig.6 represents a DVD recorder that has already been available and in the setting information storage means 45 is stored setting information that has always been used. In this state, an optical disk 61 is mounted on the DVD recorder 401 and a "writing" instruction is input to the DVD recorder 401 to write the setting information in the DVD recorder 401 into the optical disk 61.

Next, the optical disk 61 is detached from the DVD recorder 401 and inserted into the DVD recorder 402. Then, the setting information recorded on the optical disk 61 is stored into the setting information storage means 45 in the DVD recorder 402 by inputting a "reading" instruction to the DVD recorder 402. After this operation, the relationship between input numbers and received channel numbers in the DVD recorder 402 is the same as that in the DVD recorder 401 regardless of whether or not the optical disk 61 is mounted on the DVD recorder 402.

That is, the relationship between input numbers and received channel numbers in the two DVD recorders 401 and 402 can be the same. Therefore, even if a further new DVD recorder may be purchased, the relationship between input numbers and received channel numbers in the newly purchased third DVD recorder can be the same as that in the DVD recorder 401 that has already been available through the same operation.

In addition, if the optical disk 61 has setting information written by the setting information writing apparatus shown in Fig.1, the relationship between input numbers and received channel numbers corresponding to the area can be set also in the DVD recorder 401 without setting the relationship between input numbers and received channel numbers. Therefore, even if the channel of TV broadcasts to be received may be changed due to relocation, etc., using the setting information writing apparatus to write the setting information corresponding to the new address area into the optical disk 61 allows the relationship between input numbers and received channel numbers corresponding to the area to be set in the DVD recorder 401 without setting the relationship between input numbers and received channel numbers. That is, it is possible to save the effort of channel setting.

It is noted that the present invention is not restricted to the above-described embodiments, and the external recording medium may be any other medium.

Also, the case where the tuner-incorporated electronic apparatus is applied to a TV receiver or a DVD recorder has been described, but the apparatus may be applied similarly to any other apparatus including a tuner section for receiving TV broadcasts.

Further, the method in which the setting information writing apparatus acquires setting information from an optical disk with programs and the setting information recorded thereon has been described, but it is also possible to employ an arrangement in which the setting information is acquired through a communication line.

## Claims

1. A setting information writing apparatus for writing setting information into an external recording medium to be used in a tuner-incorporated electronic apparatus comprising:
a tuner section for receiving TV broadcasts;
setting information storage means for storing setting information indicating the relationship between an input number to be input to input means and a TV broadcast channel number to be received by said tuner section;
information reading means for reading setting information written in an external recording medium attachable/detachable to/from the apparatus main body into said setting information storage means when instructed to read said setting information; and
channel control means for setting the channel corresponding to said input number by referring to said setting information stored in said setting information storage means when said input number is input,
said setting information writing apparatus comprising said input means for inputting area information indicating an area, wherein
the setting information corresponding to said area information input to said input means is displayed on a display device by referring to a database with setting information corresponding to respective areas recorded therein and the setting information displayed on said display device can be changed, and further the setting information displayed on said display device is written into said external recording medium when instructed to write therein.

2. A setting information writing apparatus for writing setting information into an external recording medium to be used in a tuner-incorporated electronic apparatus comprising:
a tuner section for receiving TV broadcasts;
setting information storage means for storing setting information indicating the relationship between an input number to be input to input means and a TV broadcast channel number to be received by said tuner section;
information reading means for reading setting information written in an external recording medium attachable/detachable to/from the apparatus main body into said setting information storage means when instructed to read said setting information; and
channel control means for setting the channel corresponding to said input number by referring to said setting information stored in said setting information storage means when said input number is input,
said setting information writing apparatus comprising said input means for inputting area information indicating an area, wherein
the setting information corresponding to said area information input to said input means is written into said external recording medium by referring to a database with setting information corresponding to respective areas recorded therein.

3. The setting information writing apparatus according to claim 2, wherein the setting information corresponding to said area information input to said input means is displayed on a display device.

4. A tuner-incorporated electronic apparatus comprising:
a tuner section for receiving TV broadcasts;
setting information storage means for storing setting information indicating the relationship between an input number to be input to input means and a TV broadcast channel number to be received by said tuner section;
information writing means for writing setting information stored in said setting information storage means into an external recording medium attachable/detachable to/from the apparatus main body when instructed to write said setting information;
information reading means for reading setting information written in said external recording medium into said setting information storage means when instructed to read said setting information; and
channel control means for setting the channel corresponding to said input number by referring to said setting information stored in said setting information storage means when said input number is input, wherein
said setting information storage means is a nonvolatile memory.

5. The tuner-incorporated electronic apparatus according to claim 4, further comprising a disk driving section for writing data into an optical disk and for reproducing data written in an optical disk, wherein
said external recording medium is an optical disk.
